# EUROPEAN PATENT APPLICATION

(11) **EP 4 831 065 A1**
(43) Date of publication of application: **28.10.2026**
(21) Application number: 26172533.7
(22) Date of filing: 15.04.2026
(51) Int. Cl.: B64D 45/00, B64D 47/08

(54) **MULTIFUNCTION SIGNAGE ASSEMBLIES AND RELATED METHODS**

(30) Priority: 22.04.2025 US 202519186389
(71) Applicant: The Boeing Company, Arlington, VA 22202 (US)
(72) Inventor: LEE, Donald B, SHORELINE, WA (US)
(74) Representative: Plasseraud IP

(57) **Abstract**

Multifunction signage assemblies include a programmable display, one or more environmental sensors, a camera module and a processing unit, and perform multiple functions within a vehicle, such as an aircraft, in which the multifunction signage assembly is installed. Related methods may include removing a conventional exit sign from vehicle and replacing the conventional exit sign with a multifunction signage assembly. The signage assembly has the same form and fit of the exit sign and may be connected to an existing video surveillance system (VSS) of the vehicle, to record video from within an interior environment of the vehicle, and/or monitor and record sensor data from at least one environmental sensor of the multifunction signage assembly. Methods additionally or alternatively may include performing analytics within an interior environment of a vehicle using the video from the camera module and/or the sensor data from the at least one environmental sensor.

## Description

### FIELD

The present disclosure relates to multifunction signage assemblies, systems including the same, and related methods. More particularly, disclosed multifunction signage assemblies may be configured for video surveillance, sensor data collection, and performing analytics within an interior space of a vehicle such as an aircraft passenger cabin.

### BACKGROUND

Installing new surveillance systems in aircraft passenger cabins traditionally requires the costly and time-consuming redesign and rework of the aircraft cabin's interior design to accommodate new equipment mounts, wiring, and protective fairings. Existing solutions involve drilling new holes in interior sidewalls, monuments, class dividers, and/or ceiling panels, and designing new mounts and shrouds to enclose and cover the cameras and sensors being installed in the aircraft cabin. Often this design and installation process involves several tries in a mockup or in the aircraft itself to get the camera or sensor installation acceptable for the customer, resulting in installation and procedural downtime. Additionally, locations change between customers, which forces redesign of these installations between customers. Such custom cabin ceiling, wall, panel, and shroud installations are time consuming, even without redesigns and customization. Furthermore, new fairings for camera installations often interfere with passengers being able to see required information and emergency signs within the aircraft cabin, and conventional surveillance systems require increased cabin crew workload.

### SUMMARY

Disclosed multifunction signage assemblies may be configured to utilize the empty space of a conventional exit sign lightbox/fairing as the enclosure for new electronics for the multifunction signage assembly. In disclosed methods, installation of a new surveillance system in a vehicle such as an aircraft may be performed by swapping the original exit signage for the disclosed multifunction signage assembly, and may be accomplished without requiring new holes or fairings in the vehicle. Multifunction signage assemblies also may provide programmable and dimmable displays that can, for example, be reconfigured for language and pictorial signage as passenger and route changes require, and/or be dimmed to better match lighting designs within a vehicle (e.g., within an aircraft cabin).

An exemplary method may include removing an exit sign from a vehicle and replacing the exit sign with a multifunction signage assembly. The multifunction signage assembly may have the same form and fit of the removed exit sign, and the multifunction signage assembly may include a housing defining an internal cavity, a programmable display visible on at least one external surface of the housing, at least one environmental sensor positioned within the internal cavity of the housing, a camera module configured to record and store video recordings within the interior environment within the vehicle, and a processing unit positioned within the internal cavity of the housing. The at least one environmental sensor may be configured to measure or detect one or more events or changes within an interior environment within the vehicle. The programmable display may display an informational or emergency message for passengers within the vehicle. The camera module may be positioned within the internal cavity of the housing. The processing unit may be operatively coupled to the camera module, the at least one environmental sensor, and the programmable display. Methods may further include connecting the multifunction signage assembly to an existing Video Surveillance System (VSS) of the vehicle, via a wired connection and/or a wireless network connection, recording video from within an interior environment of the vehicle, via the camera module of the multifunction signage assembly, and monitoring and/or recording sensor data from the at least one environmental sensor of the multifunction signage assembly.

Another exemplary method may include analyzing video from a camera module of a multifunction signage assembly, monitoring and analyzing sensor data from at least one environmental sensor of the multifunction signage assembly, and performing analytics within an interior environment of a vehicle using the video from the camera module and/or the sensor data from the at least one environmental sensor. Performing analytics may include theft detection, tracking seat activity, tracking passenger motion within the interior environment, detecting identity theft, detecting abnormal activity within the interior environment of the vehicle, identifying a loose panel within the interior environment of the vehicle, identifying a seat with issues, monitoring cabin activity during passenger boarding, monitoring meal service times and duration, monitoring cabin crew cabin checks, monitoring time to answer passenger call requests, monitoring passenger debarkation, and/or detecting a sick passenger.

Multifunction signage assemblies for a vehicle also are disclosed, and may include a housing defining an internal cavity, a programmable display visible on at least one external surface of the housing, at least one environmental sensor positioned within the internal cavity of the housing, a camera module configured to record and store video recordings within the interior environment within the vehicle, and a processing unit positioned within the internal cavity of the housing. The programmable display may be configured to display an informational or emergency message for passengers within the vehicle. The at least one environmental sensor may be configured to measure or detect one or more events or changes within an interior environment within the vehicle. The camera module may be positioned within the internal cavity of the housing. The processing unit may be operatively coupled to the camera module, the at least one environmental sensor, and the programmable display. Said multifunction signage assemblies may be configured to provide video surveillance, sensor data collection, and analytics performance within an interior of a vehicle, in addition to providing the lighting or signage information for passengers provided by conventional interior signs. Systems and vehicles including such multifunction signage assemblies also are within the scope of the present disclosure.

### BRIEF DESCRIPTION OF THE DRAWINGS

Fig. 1 is an exploded schematic black box diagram representing multifunction signage assemblies according to the present disclosure.
Fig. 2 is a schematic, side elevation diagram representing multifunction signage assemblies according to the present disclosure.
Fig. 3 is a schematic, bottom view diagram representing multifunction signage assemblies according to the present disclosure.
Fig. 4 is a schematic side elevation view of an aircraft cabin incorporating multifunction signage assemblies according to the present disclosure.
Fig. 5 is a schematic side elevation view of an aircraft cabin incorporating multifunction signage assemblies according to the present disclosure.
Fig. 6 is a perspective view of an example of multifunction signage assemblies according to the present disclosure.
Fig. 7 is a perspective view of an example of a multifunction signage assembly according to the present disclosure.
Fig. 8 is a perspective view of an example of a multifunction signage assembly according to the present disclosure.
Fig. 9 is a flowchart schematically representing methods of retrofitting a vehicle with one or more multifunction signage assemblies according to the present disclosure.
Fig. 10 is a flowchart schematically representing methods of performing analytics, using one or more multifunction signage assemblies according to the present disclosure.
Fig. 11 is a flowchart schematically representing methods of identifying disruptive passengers, using one or more multifunction signage assemblies according to the present disclosure.
Fig. 12 is a flowchart schematically representing methods of identifying potential thefts on board the vehicle, using one or more multifunction signage assemblies according to the present disclosure.
Fig. 13 is a flowchart schematically representing methods of identifying sick passengers on board the vehicle, using one or more multifunction signage assemblies according to the present disclosure.
Fig. 14 is a flowchart schematically representing methods of identifying persons of interest on board the vehicle, using one or more multifunction signage assemblies according to the present disclosure.

### DESCRIPTION

Multifunction signage assemblies and related methods are disclosed. Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

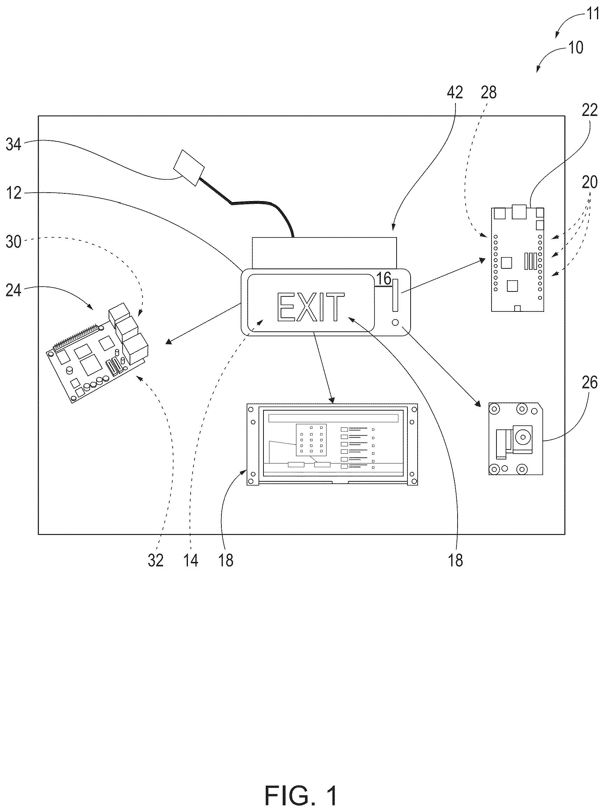

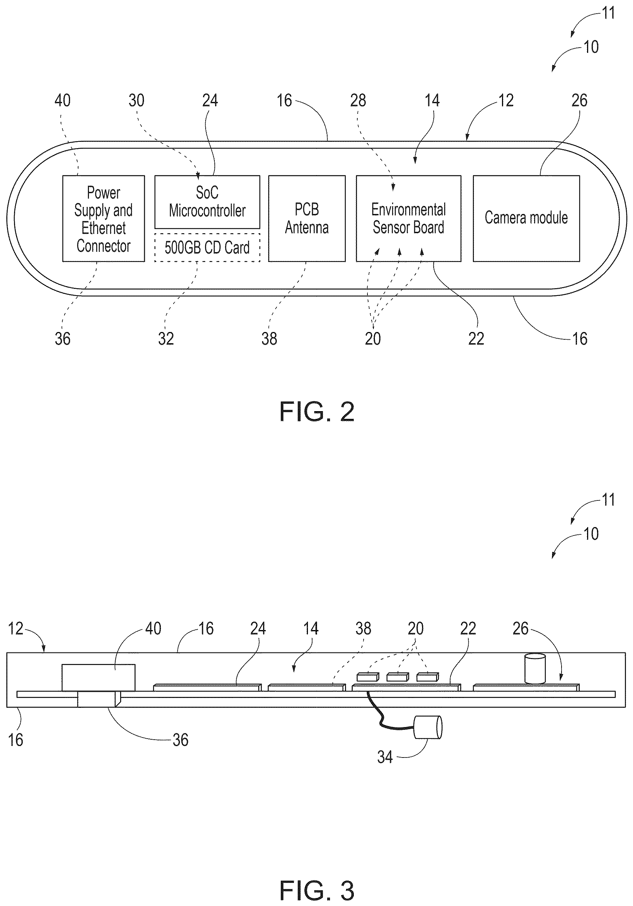

Figs. 1-3 schematically illustrate non-exclusive examples of disclosed multifunction signage assemblies 10 for vehicles 11. Multifunction signage assemblies 10 generally include a housing 12 that defines an internal cavity 14. Housing 12 includes one or more external surfaces 16. A programmable display 18 is visible on at least one external surface 16 of housing 12. Programmable display 18 is reconfigurable, such that graphics and/or text displayed on programmable display 18 are selectively changeable. Programmable display 18 displays an informational or emergency message for passengers within vehicle 11. For example, programmable display 18 may display text such as "EXIT" for an exit sign, may provide lighting, and/or may include graphics such as lavatory occupied or seatbelt graphics. In some examples, programmable display 18 is selectively and/or automatically dimmable. Disclosed multifunction signage assemblies 10 may be configured to be used on a plurality of different models of vehicle 11 (e.g., different aircraft models), and/or may be configured to replace an existing signage assembly of the vehicle without requiring different fairings or new holes to be drilled in the vehicle to receive one or more disclosed multifunction signage assemblies 10 within a given vehicle 11. Disclosed multifunction signage assemblies 10 both may serve the original function of the existing signage (e.g., multifunction signage assembly 10 may serve as an exit sign on an aircraft and replace the original, existing, or conventional aircraft exit sign) and also perform additional functions not provided by conventional exit signs, as discussed herein.

Multifunction signage assemblies 10 include at least one environmental sensor 20 positioned within internal cavity 14 of housing 12. Environmental sensors 20 are configured to measure or detect one or more events or changes within an interior environment within vehicle 11 (e.g., within a passenger cabin of an aircraft, which is an example of vehicle 11). In some examples, environmental sensors 20 are positioned on a sensor module, or sensor board, 22, which is contained within internal cavity 14, and may serve to electrically couple environmental sensors 20 to a processing unit 24, such as a microcontroller 24, also positioned within internal cavity 14.

Additionally, multifunction signage assemblies 10 include a camera module 26 configured to record and/or store photos and/or video recordings within the interior environment within vehicle 11. Camera module 26 also is positioned within internal cavity 14 of housing 12. Processing unit 24 is operatively coupled to camera module 26, environmental sensors 20, and programmable display 18, such that processing unit 24 is configured to send and receive information to and from each of camera module 26, environmental sensors 20, and programmable display 18. For example, processing unit 24 may be configured to (e.g., programmed to) change a language, a font, a text, a graphic, and/or a gif shown on programmable display 18, and/or to display a custom text, graphic, animation, and/or gif on programmable display 18. In some examples, processing unit 24 is selectively programmable to provide customized information on programmable display 18. Additionally or alternatively, camera module 26 and/or processing unit 24 may be driven by artificial intelligence.

Multifunction signage assembly 10 may serve as an exit sign, an airplane door exit sign, an over-aisle exit sign, a lavatory sign for an aircraft, and/or any other emergency or informational sign in a given vehicle 11. In some examples, multifunction signage assembly 10 duplicates a current (e.g., conventional) sign's form, fit, attach points, mounting, and/or signage power of the existing signage assembly. Preferably, multifunction signage assembly 10 is configured for installation in vehicle 11 without the need to redesign interior ceiling panels, side walls, class dividers and partitions, mounts, and/or monument walls of vehicle 11. For example, if multifunction signage assembly 10 has the same shape, size, and attachment points as a conventional sign in a given vehicle 11, the conventional sign simply may be removed from vehicle 11 and replaced with a disclosed multifunction signage assembly 10 without needing modifications to vehicle 11. For example, Fig. 1 schematically represents ceiling attach points 42 to physically secure or couple multifunction signage assembly 10 to a ceiling panel of vehicle 11, and which may attach multifunction signage assembly 10 to the ceiling panel in the same manner and position as a conventional sign was attached to the ceiling panel before its removal.

Additionally or alternatively, multifunction signage assembly 10 may be integrated into existing electrical systems of vehicle 11. For example, multifunction signage assembly may be operatively coupled to an existing Video Surveillance System (VSS) of vehicle 11, via a wired network connection and/or a wireless network connection, camera module 26 may be controlled via Open Network Video Interface Forum (ONVIF) protocol, and/or one or more of environmental sensors 20 may be configured to be read from one or more network connections of vehicle 11. Multifunction signage assembly 10 may utilize a vehicle power supply or power system that powered an existing signage assembly that multifunction signage assembly 10 is designed to replace. For example, in examples where vehicle 11 is an airplane, multifunction signage assembly 10 may be powered via airplane 28VDC, 115VAC, and/or via Power over Ethernet (PoE) from the airplane Video Surveillance System (VSS) network switch. Additionally or alternatively, multifunction signage assembly 10 may include an internal battery for powering multifunction signage assembly 10 during emergencies and/or unexpected interruptions in power systems on board vehicle 11. Multifunction signage assembly 10 may have a wired and/or wireless connection to vehicle 11. For example, an interface connector 34 may be configured to connect multifunction signage assembly 10 to wired power on vehicle 11, an ethernet connector 36 (e.g., a Base T wired interface) may be configured to provide a wired internet connection to multifunction signage assembly 10, an antenna 38 may be included in multifunction signage assembly 10 to provide a wireless internet connection to multifunction signage assembly 10, and/or a power supply 40 may be included within multifunction signage assembly 10. Power supply 40 may be configured to provide power to programmable display 18, camera module 26, and/or processing unit 24.

In some examples, multifunction signage assembly 10 is configured to operate as a stand-alone system on vehicle 11, while multifunction signage assembly 10 may additionally or alternatively be configured to be integrated into an airplane video surveillance system (VSS) of vehicle 11. Further, multifunction signage assembly 10 may be configured to be controlled via crew members on board vehicle 11 via a wireless interface (e.g., an input device operated by crew members that has a wireless connection with multifunction signage assembly 10, such as via an antenna 38).

Camera module 26 may include, for example, a covert cone lens, a wide angle lens, a 360° lens, a 4K resolution camera, and/or a thermal camera. In some examples, multifunction signage assembly 10 includes an infrared (IR) illuminator, which may be a component of camera module 26. The IR illuminator, when included, may be used to emit light in the infrared range to improve lighting for capturing images and video by camera module 26, without impacting lighting for passengers in vehicle 11. In some examples, camera module 26 includes a pinhole camera configured to record images and/or video with an entire zone or region of the vehicle.

Environmental sensors 20 may include a microphone, an accelerometer, a humidity sensor, a temperature sensor, a carbon dioxide sensor (e.g., positioned by an outflow valve of vehicle 11), a methane sensor, a light sensor, a ultraviolet (UV) light sensor, a barometric sensor, an air movement sensor, an ultrasonic sensor, a LIDAR sensor, an audio sensor (e.g., for detecting unusual noises), a vibration sensor, a magnetic (Hall effect) sensor, an air pressure sensor, an airflow sensor, a multi-sensor module, an oxygen sensor, an ammonia sensor, an olfactory sensor, a shock/crash sensor, a force/load/torque/strain sensor, a position sensor, a motion/velocity sensor, a radio frequency (RF) sensor, a smoke sensor, a radio frequency identification (RFID) sensor, a gas sensor, a sulfur dioxide sensor, a six-axis inertial sensor (e.g., to detect unusual vibrations), and/or a hydrocarbon sensor. In some examples, sensor module 22 includes a sensor array 28 (e.g., a phased array) configured to monitor data from at least one environmental sensor 20. Environmental sensors 20 also may include one or more switches, such as a magnet switch sensor that crew members may tap to send an alert to the vehicle's flight deck, pilot, or other operator. Data from environmental sensors 20 can be used by multifunction signage assemblies 10 to perform analytics on board vehicle 11, such as predicting increased fatigue in an area of vehicle 11 based on detecting unusual vibration and recommending maintenance, detecting airflow in unexpected areas and sending an alert to crew members, diagnosing a door seal that needs attention based on detecting an increase in ambient noise combined with a decrease in pressure, or detecting a noise near a seat and determining a potential need for maintenance on a seat actuator binding.

Processing unit 24 may include a System on Chip (SoC) microcontroller 30 and/or a removable storage 32 that stores video from camera module 26 and/or data from one or more environmental sensors 20. In some examples, removable storage 32 is a removable Secure Digital (SD) storage card, which may have a storage capacity of at least 500 gigabytes (GB). Data stored on the removable storage 32 generally is only accessed after an event has occurred on or in vehicle 11. Thus, generally, disclosed multifunction signage assemblies 10 do not retain any personally identifiable information for passengers on board vehicle 11. Processing unit 24 may be any suitable device or devices that are configured to perform the functions of the processing unit discussed herein. For example, processing unit 24 may include one or more of an electronic controller, a dedicated controller, a special-purpose controller, a personal computer, a special-purpose computer, a display device, a logic device, a memory device, and/or a memory device having non-transitory computer readable media suitable for storing computer-executable instructions for implementing aspects of systems and/or methods according to the present disclosure.

Additionally or alternatively, processing unit 24 may include, or be configured to read, non-transitory computer readable storage, or memory, media suitable for storing computer-executable instructions, or software, for implementing methods or steps of methods according to the present disclosure. Examples of such media include CD-ROMs, disks, hard drives, flash memory, etc. As used herein, storage, or memory, devices and media having computer-executable instructions as well as computer-implemented methods and other methods according to the present disclosure are considered to be within the scope of subject matter deemed patentable in accordance with Section 101 of Title 35 of the United States Code.

As compared to prior art vehicle signs, disclosed multifunction signage assemblies 10 may be configured to make efficient use of internal cavity 14 within housing 12. Because of this, disclosed multifunction signage assemblies 10 may be configured to perform a plurality of different functions that conventional vehicle signs are not capable of performing. For example, disclosed multifunction signage assemblies 10 may be configured for video surveillance and safety applications within vehicle 11 and/or may be configured to perform analytics on board vehicle 11. For example, multifunction signage assembly 10 may have one or more software-enabled features for facial recognition of passengers within vehicle 11, detecting overhead bin status for stow bins of vehicle 11, and/or identifying passenger issues while on board vehicle 11, and/or multifunction signage assembly 10 may be configured to perform analytics on board vehicle 11 such as related to theft detection, tracking seat activity, tracking passenger motion within the interior environment, detecting identity theft, detecting abnormal activity within the interior environment of the vehicle, identifying a loose panel within the interior environment of the vehicle, identifying a seat with issues, monitoring cabin activity during passenger boarding, monitoring meal service times and duration, monitoring cabin crew cabin checks, monitoring time to answer passenger call requests, and/or monitoring passenger debarkation. While examples herein are primarily concerned with examples of vehicles 11 in the form of an aircraft 44, it is to be understood that disclosed multifunction signage assemblies 10 may be used as described herein in other types of vehicles, such as public transportation vehicles, trucks, buses, trains, automobiles, subways, trams, trolleys, boats and other vessels, and etc.

In some examples, multifunction signage assembly 10 is autonomous, while in some examples, multifunction signage assembly 10 is configured to selectively operate in both, or either, an autonomous mode and in a connected mode. For example, in an autonomous mode, multifunction signage assembly 10 may be configured to locally record both video via camera module 26 and sensor data from at least one environmental sensor 20 whenever multifunction signage assembly 10 is powered. In autonomous mode, multifunction signage assemblies 10 may be configured to be a low-impact or no-impact system for airlines. In a connected mode, multifunction signage assembly 10 may be connected to the airplane Video Surveillance System (VSS), camera module 26 may be controlled by the VSS via Open Network Video Interface Forum (ONVIF) protocol (e.g., multifunction signage assembly 10 may be configured to function as another camera on the VSS), and at least one environmental sensor 20 can be read from network connections with vehicle 11. In some examples, VSS reads the environmental sensors 20 and records and stores data as defined by the networked VSS.

Disclosed multifunction signage assemblies 10 may be configured to provide a simple way to add additional capability to the interior of a vehicle, such as a cabin of an airplane and allow significantly more surveillance options for airplane and ground installations. These improvements may result in cost savings (e.g., by reducing the number of parts installed, due to re-using existing systems), and better functionality via more/higher quality integrated sensor/signage options. Multifunction signage assemblies 10 may be adapted or optimized to be configured to be easily added to any aircraft interior or to other vehicles or ground implementations. Multifunction signage assemblies 10 may be configured as a plug-n-play addition to existing vehicles, with easy installation (whether line-fit or retrofit) and integration with any sensor system on the vehicle or in a ground installation like an airport terminal.

Potential benefits of disclosed multifunction signage assemblies 10 may include easy cabin installation in an existing signage location, thereby providing easy access to the airplane cabin (or other vehicle interior space) and fast in-line and retrofit installs, installation without any wiring or mounting changes to the vehicle's interior design, the ability to use a common set of electronic signage across all airplane or other vehicle models, the ability for video and environmental surveillance system installation without impact to the vehicle's interior design, and/or the ability to perform software analytics for new data gathering and features based on data from environmental sensors. Additionally or alternatively, methods disclosed herein for implementation using multifunction signage assemblies may provide protection for vehicle operators against theft, false passenger claims, and/or unruly passenger lawsuits. Some examples may provide benefits such as avoiding unnecessary increased cabin crew workload, and avoiding installation and procedural downtime during installation of multifunction signage assemblies 10.

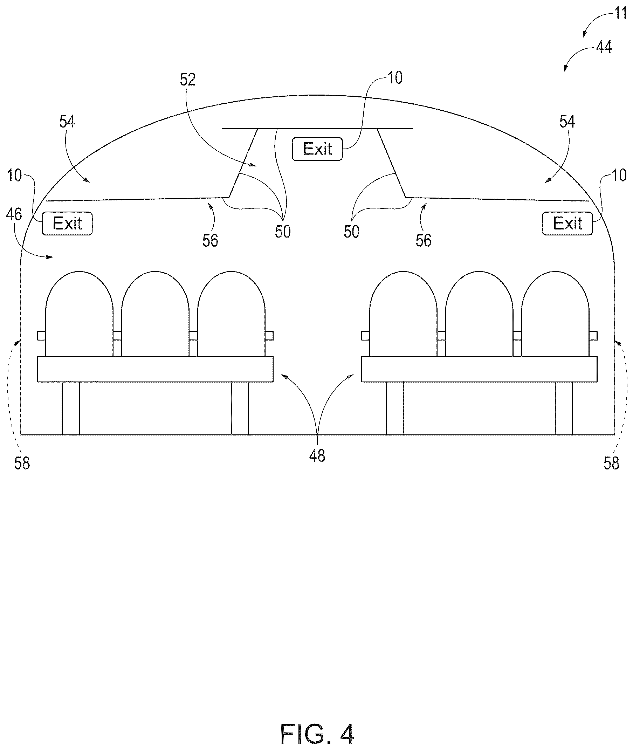

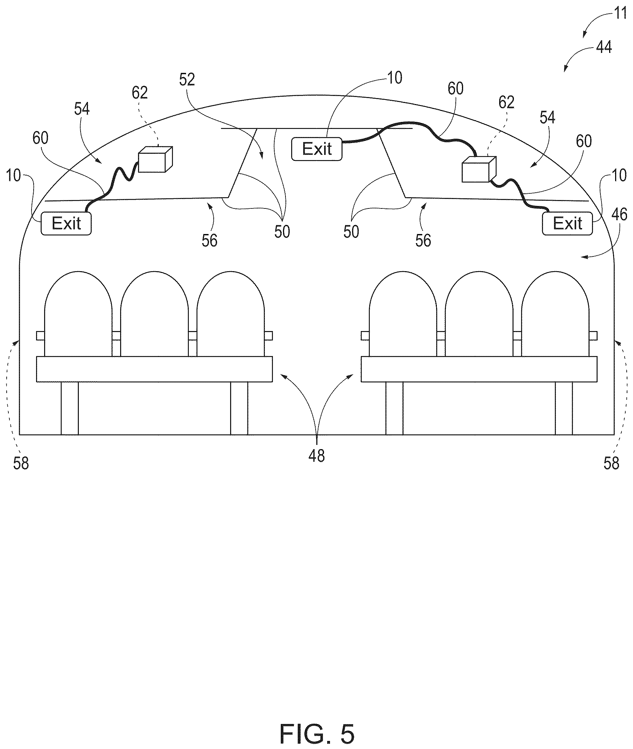

Figs. 4-5 schematically illustrate non-exclusive examples of vehicles 11 in the form of an aircraft 44 that includes a plurality of disclosed multifunction signage assemblies 10 in different configurations. Aircraft 44 is schematically represented in cross-section, showing an interior cabin 46 with a plurality of passenger seats 48. Multifunction signage assemblies 10 may be included in a plurality of different locations of aircraft 44, as shown in Figs. 4-5. For example, ceiling panels 50 may be arranged in aircraft 44 to define a crown area 52 along an aisle between rows of seats 48, as well as to define stow bin areas 54 for overhead storage bins. One or more disclosed multifunction signage assemblies 10 may be located in crown area 52 (e.g., along a cabin ceiling defined by ceiling panels 50) to serve as aisle exit signs. Additionally or alternatively, one or more disclosed multifunction signage assemblies 10 may be located along a stow bin line 56 of aircraft 44, such as by one or more emergency exit doors 58 of aircraft 44, to serve as emergency exit door signs. Thus, at least one multifunction signage assembly 10 may be positioned in each of a plurality of different airplane zones of aircraft 44. In the configuration shown in Fig. 5, multifunction signage assemblies 10 are operatively coupled to one or more aircraft systems via equipment network cables 60, such as to a convolutional neural network (CNN) and/or a cabin services system (CSS) 62 of aircraft 44 that may be configured to control multifunction signage assemblies 10.

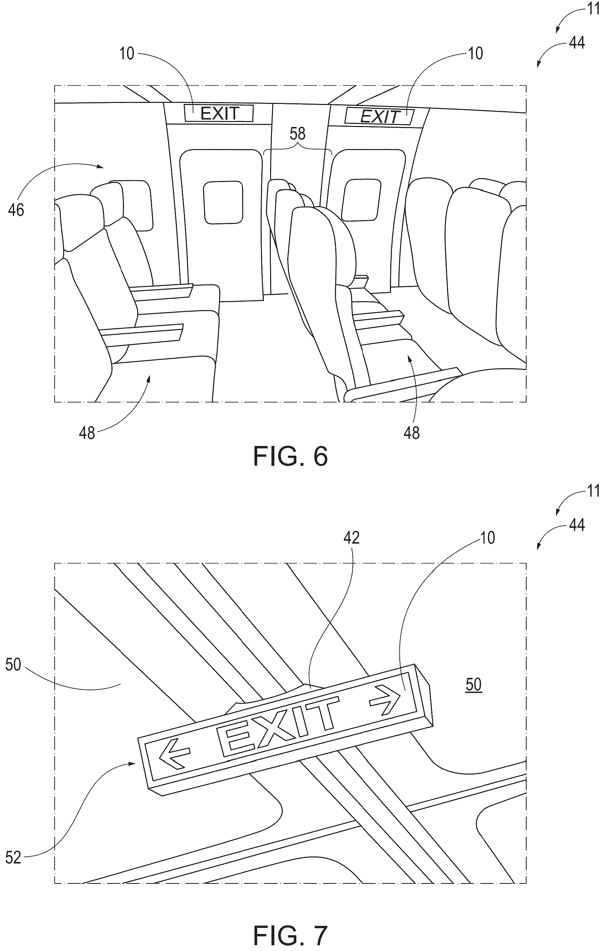

Turning now to Figs. 6-8, illustrative, non-exclusive examples of multifunction signage assemblies 10 installed in a vehicle 11 (in the form of an aircraft 44) are illustrated. Where appropriate, the reference numerals from the schematic illustrations of Figs. 1-5 are used to designate corresponding parts of the examples of Figs. 6-8; however, the examples of Figs. 6-8 are non-exclusive and do not limit multifunction signage assemblies 10 (or their respective positions within aircraft 44) to the illustrated embodiments of Figs. 6-8. That is, multifunction signage assemblies 10 are not limited to the specific embodiments and positions shown in Figs. 6-8 and may incorporate any number of the various aspects, configurations, characteristics, properties, etc. of multifunction signage assemblies 10 that are illustrated in and discussed with reference to the schematic representations of Figs. 1-5 and/or the embodiments of Figs. 6-8, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to the examples of Figs. 6-8; however, it is within the scope of the present disclosure that the previously discussed features, variants, etc. may be utilized with the examples of Figs. 6-8.

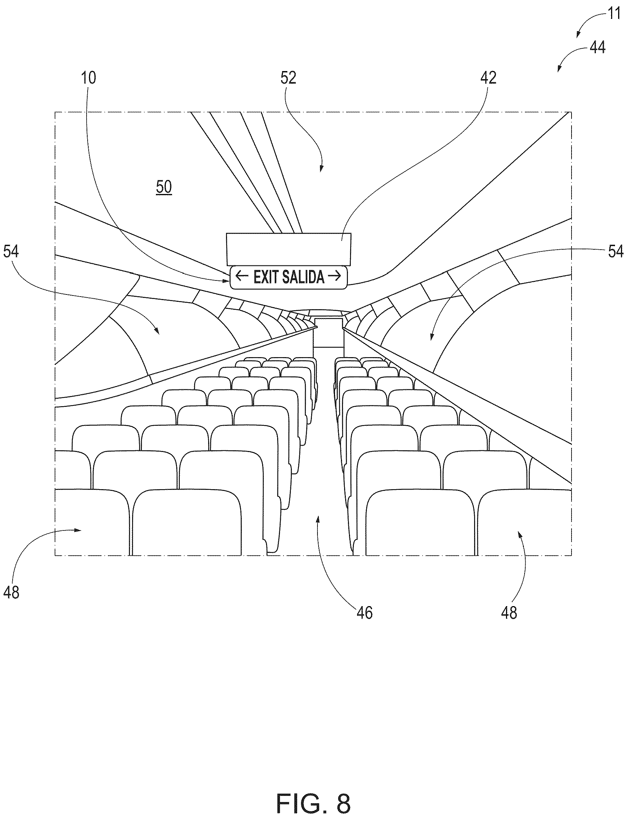

Fig. 6 shows an example of multifunction signage assemblies 10 installed as emergency exit door signs for emergency exit doors 58. Fig. 7 shows an example of multifunction signage assembly 10 installed in crown area 52, coupled to ceiling panels 50 via attach points 42. As noted herein, attach points 42 are preferably the same form, fit, and function as the manner in which conventional exit signs would have been secured within aircraft 44, such that multifunction signage assembly 10 may be installed in aircraft 44 without requiring drilling any new mounting holes, installing new fairings, or otherwise modifying the cabin of aircraft 44. Fig. 8 shows another example of multifunction signage assembly 10 installed in crown area 52 of aircraft 44, coupled to ceiling panels 50.

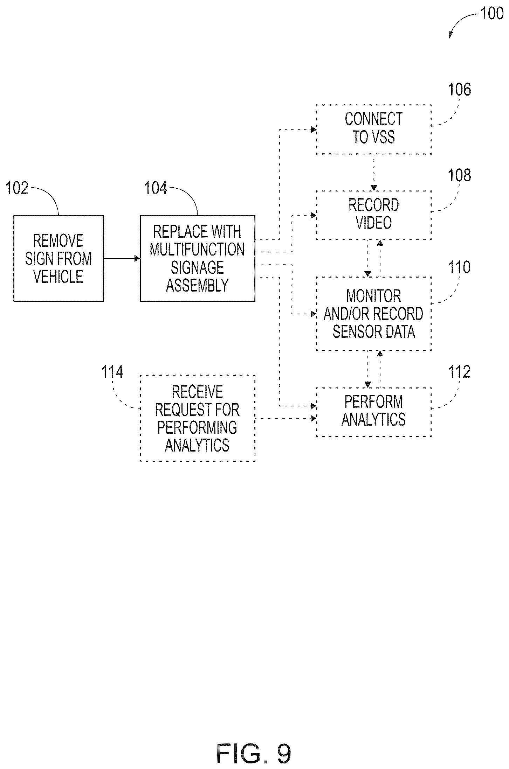

Figs. 9-14 schematically provide flowcharts that represent illustrative, non-exclusive examples of methods according to the present disclosure. In Figs. 9-14, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Figs. 9-14 are not limiting and other methods and steps are within the scope of the present disclosure, including methods having greater than or fewer than the number of steps illustrated, as understood from the discussions herein.

Fig. 9 illustrates methods 100 of retrofitting a vehicle (e.g., vehicle 11, such as aircraft 44), with one or more multifunction signage assemblies 10 according to the present disclosure. Methods 100 include removing a conventional sign (e.g., an existing exit sign) from an aircraft or other vehicle, at 102, and replacing the conventional sign with the multifunction signage assembly 10 of the present disclosure, at 104. Such retrofitting in methods 100 may be facilitated by ensuring that the multifunction signage assembly has the same form and fit of the conventional sign being replaced. Methods 100 may include connecting the multifunction signage assembly to an existing Video Surveillance System (VSS) of the aircraft at 106, which may be via a wired connection and/or a wireless network connection.

Once the multifunction signage assembly is installed in the aircraft, methods 100 may include recording video and/or photographs from within an interior environment of the aircraft (e.g., interior cabin 46) at 108, via a camera module of the multifunction signage assembly (e.g., camera module 26). Similarly, methods 100 generally additionally include monitoring and/or recording sensor data from at least one environmental sensor of the multifunction signage assembly (e.g., environmental sensors 20), at 110. Additionally or alternatively, methods 100 may include performing analytics within an interior environment of the aircraft, at 112, based on data from the environmental sensors and/or images or video recorded by the camera module. Performing analytics at 112 may be performed autonomously and/or automatically, and/or may be performed in response to receiving a request for analytics performance from a crew member of the aircraft, at 114. The processing unit of disclosed multifunction signage assemblies may be programmed to perform the analytics and other functions described herein. As illustrative, non-limiting examples, performing analytics at 112 may include theft detection, tracking seat activity, tracking passenger motion within the interior environment, detecting identity theft, detecting abnormal activity within the interior environment of the aircraft, identifying a loose panel within the interior environment of the aircraft, identifying a seat with issues, monitoring cabin activity during passenger boarding, monitoring meal service times and duration, monitoring cabin crew cabin checks, monitoring time to answer passenger call requests, and/or monitoring passenger debarkation.

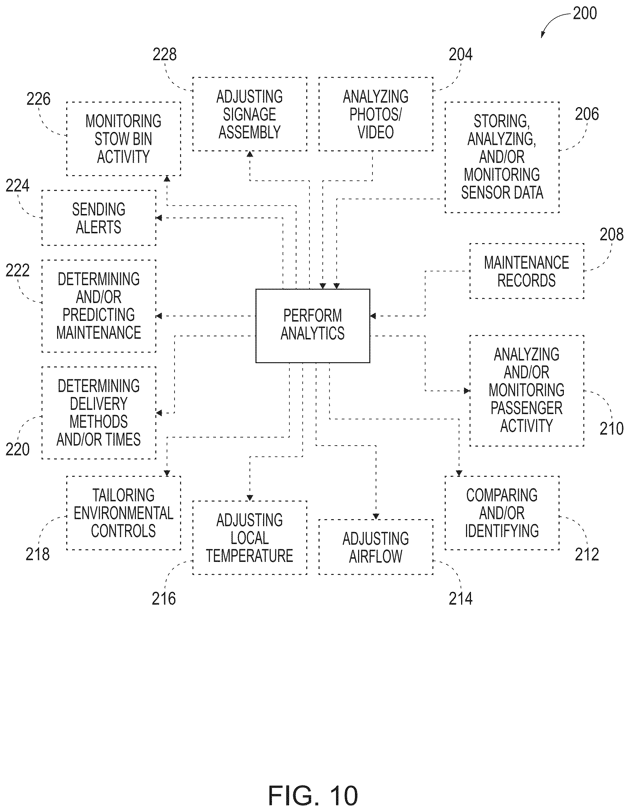

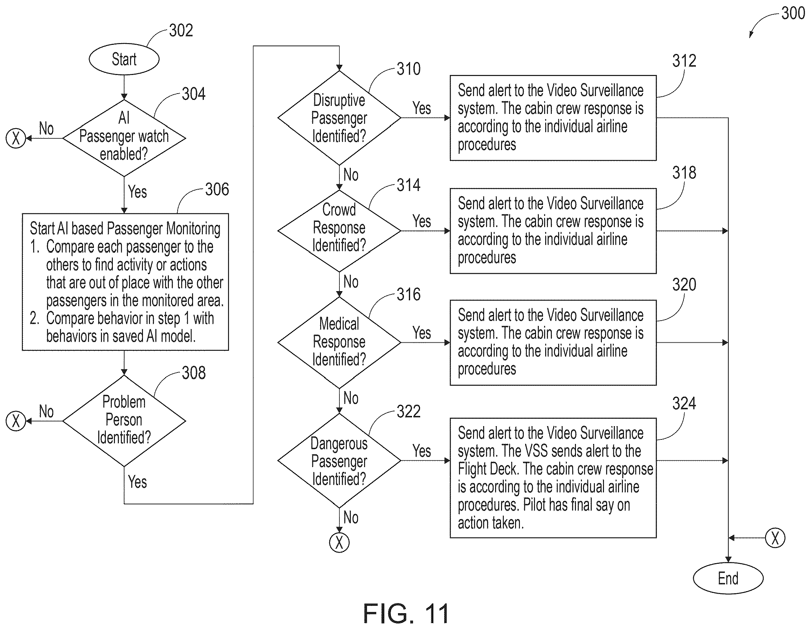

Methods 200 shown in Fig. 10 include performing analytics within an interior environment of an aircraft using disclosed multifunction signage assemblies, at 202, and may include any or all of the method steps of methods 100 shown in Fig. 9, and/or any or all of the methods of Figs. 11-14. As noted, performing analytics at 202 may include one or more of the following non-limiting examples: performing analytics comprises theft detection, tracking seat activity, tracking passenger motion within the interior environment, detecting identity theft, detecting abnormal activity within the interior environment of the aircraft, identifying a loose panel within the interior environment of the aircraft, identifying a seat with issues, monitoring cabin activity during passenger boarding, monitoring meal service times and duration, monitoring cabin crew cabin checks, monitoring time to answer passenger call requests, monitoring passenger debarkation, and/or detecting a sick passenger.

As inputs for performing analytics at 202, methods 200 may include analyzing video from one or more camera modules of one or more multifunction signage assemblies at 204, storing, monitoring, and/or analyzing sensor data from at least one environmental sensor of at least one multifunction signage assembly at 206, and/or combining analytics with vehicle maintenance records at 208, such as to correlate sensor events with failures or events recorded in past maintenance logs. In some examples, performing analytics at 202 is driven by artificial intelligence (Al). Performing analytics 202 is generally performed without retaining any personally identifiable information of passengers on board the aircraft. Outputs from performing analytics at 202 generally may include adjusting one or more aircraft (or other vehicle) systems, analyzing passengers and/or passenger activity on board the aircraft, and/or determining recommended courses of action for maintenance or improving efficiencies, based on information determined during performing analytics at 202.

For example, methods 200 of performing analytics at 202 may include monitoring and/or analyzing passenger activity at 210, such as determining a typical duration for passenger boarding, meal services, cabin crew cabin checks, time to answer passenger call requests, and/or passenger debarkation and/or determining whether a respective passenger returns to a same seat after a measured increase in stow bin activity is detected. Additionally or alternatively, methods 200 may include comparing and/or identifying traits or behaviors exhibited by passengers, at 212, such as comparing each passenger on board an aircraft to other passengers to find activity or actions that are out of place with other passengers in a monitored area of the aircraft, comparing passenger behavior with behavior stored in an AI model, identifying a disruptive passenger, identifying a crew response, identifying a medical response, and/or identifying a dangerous passenger, based on information determined during performing analytics at 202.

In terms of adjusting one or more aircraft (or other vehicle) systems based on performing analytics at 202, methods 200 may include adjusting an airflow in the aircraft based on information determined during performing analytics, at 214, adjusting a local temperature based on information determined during performing analytics, at 216, and/or tailoring environmental controls for maximum efficiency and passenger comfort based on information determined during performing analytics, at 218. For example, if, based on monitoring sensor data at 206, analytics performed at 202 determines that a localized area of the aircraft has a higher temperature than a predetermined threshold temperature, or has a higher temperature than other areas of the aircraft, the multifunction signage assembly may be programmed to then adjust the local temperature at 216 and/or adjust the airflow to that localized area at 214, to lower the localized temperature below the predetermined threshold, or to even out the temperature across the aircraft. Additionally or alternatively, based on performing analytics at 202, methods 200 may include adjusting the multifunction signage assembly, at 228. For example, adjusting the multifunction signage assembly at 228 may include changing a display on the programmable display, enabling night mode on the multifunction signage assembly, powering an IR illuminator when the location being monitored is not otherwise sufficiently lit, and/or changing between an autonomous or connected mode, as illustrative non-limiting examples.

In some examples, performing analytics at 202 results in the multifunction signage assembly making determinations or recommendations. For example, methods 200 may include recommending different times for meal services and/or cabin crew cabin checks, and/or determining recommended delivery methods for meal services for efficient use of cabin crew time, at 220. Additionally or alternatively, methods 200 may include determining and/or predicting when airplane maintenance is needed, at 222, based on information determined during performing analytics and/or based on changes in the environment within the vehicle. In some examples, performing analytics at 202 results in sending alerts at 224, such as sending an alert to the VSS of the aircraft and/or sending an alert to cabin crew, based on information determined during performing analytics at 202. For example, the multifunction signage assembly may be programmed to send alerts at 224 when certain predetermined events are detected, when certain thresholds are met in sensor measurements, and/or when predetermined passenger activity is detected. For example, based on performing analytics at 202, methods 200 may include monitoring for an increase in stow bin open/close activity when cabin lighting within the aircraft is at a minimum (or when otherwise enabled), at 226, as certain such increases in activity may indicate a potential for theft on board the aircraft. If such a potential threat is detected based on monitoring stow bin activity at 226, an alert may be sent at 224 about the potential threat.

Figs. 11-14 illustrate examples of performing analytics at 202 and the resulting outputs of such performance, each of which may be software enabled via the processing unit of disclosed multifunction signage assemblies. For example, Fig. 11 illustrates an example of a method 300 of identifying problem passengers on board an aircraft or other vehicle. The analytic may be initiated at 302 and artificial intelligence (AI) passenger monitoring may be started at 306, if enabled at 304. AI passenger monitoring at 306 may include, for example, comparing each passenger to the other passengers in the aircraft to find activity or actions that are out of place from those of other passengers within the monitored area, and/or comparing each passenger's actions and/or activity with behaviors stored in an AI model. Based on monitoring passenger actions and activity at 306, if a potentially problematic passenger is identified at 308, one or more additional actions may be taken. For example, if passenger monitoring at 304 identifies a passenger that is being disruptive at 310, an alert may be sent to the aircraft VSS and/or to the cabin crew, at 312, so that appropriate action can be taken. Similarly, if passenger monitoring at 304 identifies a crowd response at 314 and/or a medical event that requires at response at 316 alerts may be sent to the aircraft VSS and/or to the cabin crew, at 318 and 320, respectively), so that appropriate action can be taken in response to these events. If passenger monitoring at 304 identifies a dangerous passenger at 322, an alert may be sent to the aircraft VSS, the flight deck, and to the cabin crew, at 324, so that appropriate action can be taken, with the aircraft pilot typically given the final say in how to proceed.

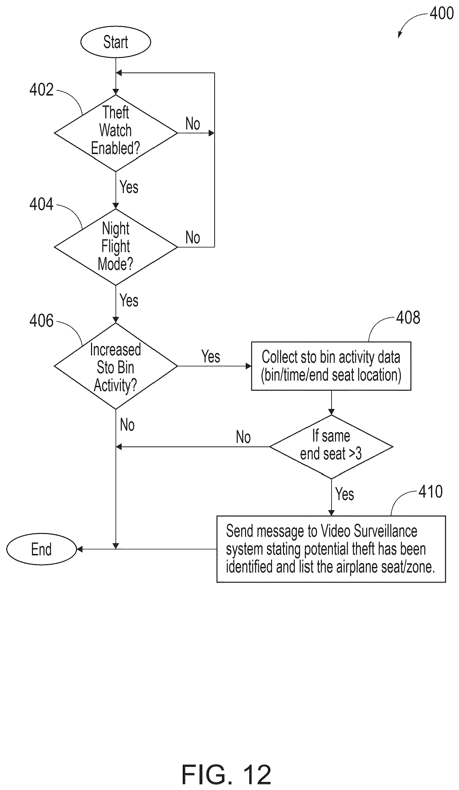

As another example of performing analytics at 202 and the resulting outputs of such performance, Fig. 12 illustrates an example of a method 400 of identifying potential stow bin thefts on board an aircraft or other vehicle. In methods 400, the multifunction signage assembly may check whether a theft watch analytic is enabled, at 402. If so, the multifunction signage assembly may check whether it is currently in night flight mode, at 404. If so (or if the analytic is otherwise enabled), the multifunction signage assembly may monitor whether there is an increase in stow bin activity (e.g., an increase in the number of times a stow bin is accessed, or the number of different stow bins being accessed), at 406. If increased stow bin activity is detected, the multifunction signage assembly may then collect stow bin activity data at 408 (e.g., the stow bin number or aisle row, the time, the passenger's original and/or end seat location, etc.). For example, the camera module of the multifunction signage assembly may monitor whether the detected person accessing the stow bin(s) returns to the same seat from where they started, or whether a passenger accesses a number of different stow bins from the same seat, etc. If conditions are measured or determined that meet preprogrammed criteria for potential theft, the multifunction signage assembly may send a theft alert message to the VSS of the aircraft to alert the cabin crew, at 410 (e.g., the processing unit of the multifunction signage assembly may be programmed to send such an alert). Alerts may include information such as the airplane seat or zone from where the passenger came from, and the stow bin(s) that were accessed.

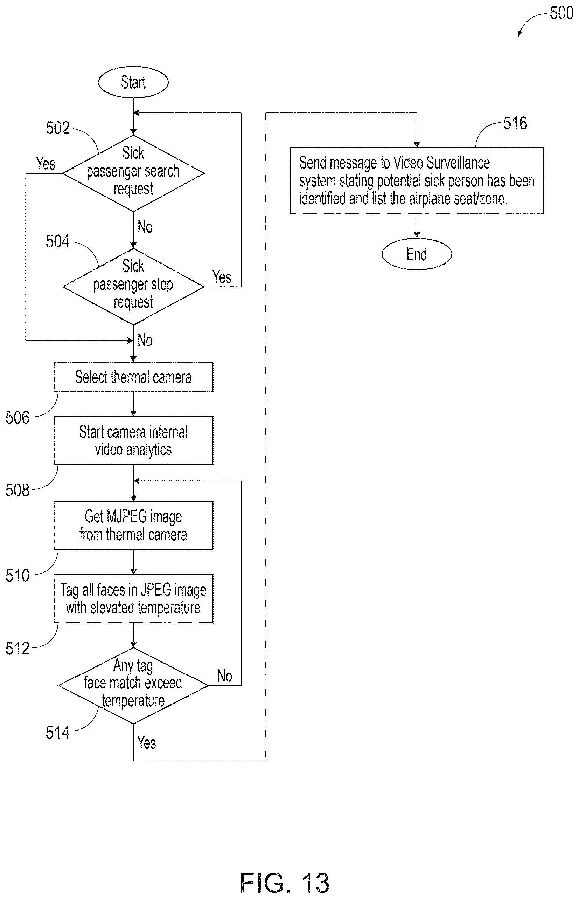

As another example of performing analytics at 202 and the resulting outputs of such performance, Fig. 13 illustrates an example of a method 500 of identifying sick passengers that may be performed entirely by disclosed multifunction signage assemblies. In methods 500, a sick passenger search request may be initiated at 502. If the search request is not stopped at 504, then a thermal camera of the camera module of a multifunction signage assembly may be selected at 506, and internal video analytics may be started, at 508. Images from the thermal camera may be obtained of passengers on board the vehicle, at 510, and any faces with an elevated temperature may be tagged, at 512. If the system determines at 514 that any of the tagged passenger faces have a temperature that exceeds a predetermined threshold temperature, a message or alert is sent to the vehicle's VSS and/or to cabin crew, at 516, that a sick passenger has been identified. Information about the airplane zone or the passenger's seat may be provided as well.

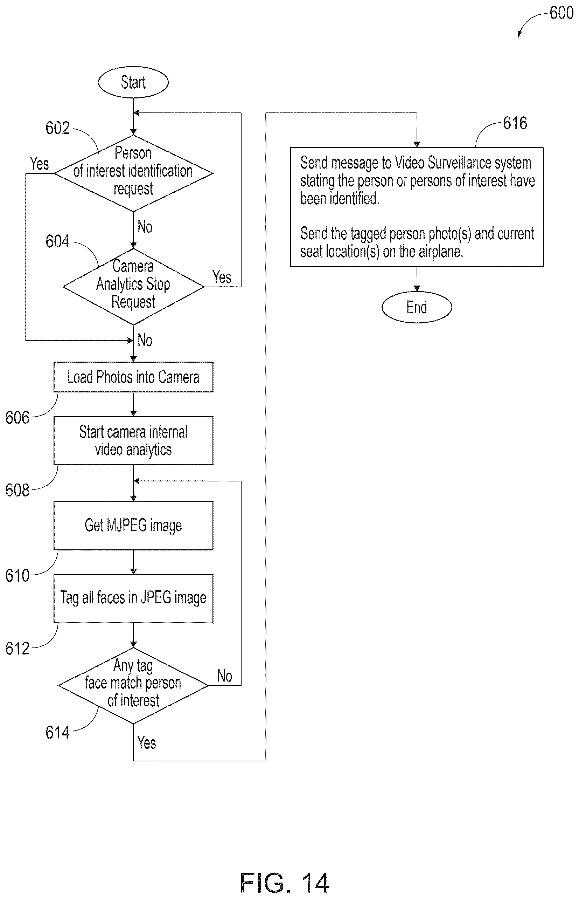

As another example of performing analytics at 202 and the resulting outputs of such performance, Fig. 14 illustrates an example of a method 600 of performing facial recognition that may be performed entirely by disclosed multifunction signage assemblies. Using automated systems of multifunction signage assemblies according to the present disclosure may enable the protection of privacy during facial recognition searches. In an illustrative example of such methods 600, a request for identification of a person of interest may be initiated, whether automatically or by a crew member, at 602. If the request is not stopped at 604, then reference photos may be loaded into the camera module or processing unit at 606, and internal video analytics may be started, at 608. Images may be obtained of passengers on board the vehicle, at 610, and compared with the photos loaded into the system at 606. Any faces may be tagged, at 612, and any matches between passenger faces and the reference photos may be identified. If the system determines at 614 that any of the tagged passenger faces match a person of interest, then a message or alert is sent to the vehicle's VSS and/or to cabin crew, at 616, that a person of interest has been identified. Information about the airplane zone or the passenger's seat may be provided as well.

Illustrative, non-exclusive examples of inventive subject matter according to the present disclosure are described in the following enumerated paragraphs:
A1. A multifunction signage assembly (10) for a vehicle (11), the multifunction_signage assembly (10) comprising:
   a housing (12) defining an internal cavity (14);
   a programmable display (18) visible on at least one external surface (16) of the housing (12), wherein the programmable display (18) displays an informational or emergency message for passengers within the vehicle (11);
   at least one environmental sensor (20) positioned within the internal cavity (14) of the housing (12), wherein the at least one environmental sensor (20) is configured to measure or detect one or more events or changes within an interior environment within the vehicle (11);
   a camera module (26) configured to record and store video recordings within the interior environment within the vehicle (11), wherein the camera module (26) is positioned within the internal cavity (14) of the housing (12); and
   a processing unit (24) positioned within the internal cavity (14) of the housing (12), wherein the processing unit (24) is operatively coupled to the camera module (26), the at least one environmental sensor (20), and the programmable display (18).
A1.1. The multifunction signage assembly (10) of paragraph A1, wherein the multifunction signage assembly (10) is configured to be used on a plurality of different vehicle models, and wherein the multifunction signage assembly (10) is configured to replace an existing signage assembly of the vehicle (11) without requiring different fairings or new holes to be drilled in the vehicle (11) to receive the multifunction signage assembly (10).
A2. The multifunction signage assembly (10) of paragraph A1 or A1.1, wherein the programmable display (18) is selectively and/or automatically dimmable.
A3. The multifunction signage assembly (10) of any of paragraphs A1-A2, wherein the processing unit (24) is configured to change a language, a font, a text, a graphic, and/or a gif shown on the programmable display (18).
A3.1. The multifunction signage assembly (10) of any of paragraphs A1-A3, wherein the processing unit (24) is configured to display a custom text, graphic, animation, and/or gif on the programmable display (18).
A3.2. The multifunction signage assembly (10) of any of paragraphs A1-A3.1, wherein the processing unit (24) is selectively programmable for providing customized information in a plurality of different vehicles and/or situations.
A4. The multifunction signage assembly (10) of any of paragraphs A1-A3.2, wherein the multifunction signage assembly (10) is configured to perform analytics.
A5. The multifunction signage assembly (10) of any of paragraphs A1-A4, wherein the multifunction signage assembly (10) is an exit sign, an airplane door exit sign, an over-aisle exit sign, and/or a lavatory sign for an aircraft (44).
A6. The multifunction signage assembly (10) of any of paragraphs A1-A5, wherein the vehicle (11) is an aircraft (44).
A7. The multifunction signage assembly (10) of any of paragraphs A1-A6, wherein the multifunction signage assembly (10) is configured for installation in the vehicle (11) without the need to redesign vehicle interior ceiling panels, side walls, class dividers and partitions, mounts, or monument walls.
A8. The multifunction signage assembly (10) of any of paragraphs A1-A7, wherein the multifunction signage assembly (10) is operatively coupled to an existing Video Surveillance System (VSS) of the vehicle (11), via a wired network connection and/or a wireless network connection.
A9. The multifunction signage assembly (10) of any of paragraphs A1-A8, wherein the camera module (26) is controlled via Open Network Video Interface Forum (ONVIF) protocol.
A10. The multifunction signage assembly (10) of any of paragraphs A1-A9, wherein the at least one environmental sensor (20) is configured to be read from one or more network connections of the vehicle (11).
A11. The multifunction signage assembly (10) of any of paragraphs A1-A10, wherein the camera module (26) comprises a covert cone lens, a wide-angle lens, and/or a 360° lens.
A12. The multifunction signage assembly (10) of any of paragraphs A1-A11, wherein the camera module (26) comprises a 4K resolution camera.
A12.1. The multifunction signage assembly (10) of any of paragraphs A1-A11, wherein the camera module (26) comprises a thermal camera.
A13. The multifunction signage assembly (10) of any of paragraphs A1-A12.1, further comprising an infrared (IR) illuminator.
A14. The multifunction signage assembly (10) of any of paragraphs A1-A13, wherein the at least one environmental sensor (20) comprises a microphone, an accelerometer, a humidity sensor, a temperature sensor, a carbon dioxide sensor, a methane sensor, a light sensor, a ultraviolet (UV) light sensor, a barometric sensor, an air movement sensor, an ultrasonic sensor, a LIDAR sensor, an audio sensor, a vibration sensor, a magnetic (Hall effect) sensor, an air pressure sensor, an airflow sensor, a multi-sensor module, an oxygen sensor, an ammonia sensor, an olfactory sensor, a shock/crash sensor, a force/load/torque/strain sensor, a position sensor, a motion/velocity sensor, a radio frequency (RF) sensor, a smoke sensor, a radio frequency identification (RFID) sensor, a gas sensor, a sulfur dioxide sensor, and/or a hydrocarbon sensor.
A14.1. The multifunction signage assembly (10) of any of paragraphs A1-A14, further comprising a sensor array (28) configured to monitor data from the at least one environmental sensor (20).
A15. The multifunction signage assembly (10) of any of paragraphs A1-A14.1, wherein the processing comprises a System on Chip (SoC) microcontroller (30).
A16. The multifunction signage assembly (10) of any of paragraphs A1-A15, further comprising a removable storage (32) that stores video from the camera module (26) and/or data from the at least one environmental sensor (20).
A17. The multifunction signage assembly (10) of paragraph A16, wherein the removable storage (32) comprises a removable Secure Digital (SD) storage card.
A18. The multifunction signage assembly (10) of any of paragraphs A16-A17, wherein the removable storage (32) has a storage capacity of at least 500 gigabytes (GB).
A19. The multifunction signage assembly (10) of any of paragraphs A1-A18, wherein the multifunction signage assembly (10) utilizes a vehicle power supply or power system that powered a/the existing signage assembly.
A20. The multifunction signage assembly (10) of any of paragraphs A1-A19, wherein the multifunction signage assembly (10) has a wired connection to the vehicle (11).
A21. The multifunction signage assembly (10) of any of paragraphs A1-A20, wherein the multifunction signage assembly (10) has a wireless connection to the vehicle (11).
A22. The multifunction signage assembly (10) of any of paragraphs A1-A21, wherein the multifunction signage assembly (10) is configured to make efficient use of the internal cavity (14) within the housing (12).
A23. The multifunction signage assembly (10) of any of paragraphs A1-A22, wherein the multifunction signage assembly (10) is configured for video surveillance and safety applications within the vehicle (11).
A24. The multifunction signage assembly (10) of any of paragraphs A1-A23, wherein the multifunction signage assembly (10) is configured to operate as a stand-alone system on the vehicle (11).
A25. The multifunction signage assembly (10) of any of paragraphs A1-A24, wherein the multifunction signage assembly (10) is configured to be integrated into an video surveillance system (VSS) of the vehicle (11).
A26. The multifunction signage assembly (10) of any of paragraphs A1-A25, wherein the multifunction signage assembly (10) duplicates a current sign form, fit, attach points, mounting, and signage power of a/the existing signage assembly.
A27. The multifunction signage assembly (10) of any of paragraphs A1-A26, wherein the multifunction signage assembly (10) is configured to be controlled via crew members on board the vehicle (11) via a wireless interface.
A28. The multifunction signage assembly (10) of any of paragraphs A1-A27, further comprising a power supply (40) configured to power the programmable display (18), the camera module (26), and/or the processing unit (24).
A29. The multifunction signage assembly (10) of any of paragraphs A1-A28, further comprising an ethernet connector (36) (e.g., a Base T wired interface) and/or a wireless network interface.
A30. The multifunction signage assembly (10) of any of paragraphs A1-A29, wherein the multifunction signage assembly (10) is autonomous.
A31. The multifunction signage assembly (10) of any of paragraphs A1-A30, further comprising one or more software-enabled features for facial recognition, detecting stow bin status, and/or identifying passenger issues.
A32. The multifunction signage assembly (10) of any of paragraphs A1-A31, wherein the multifunction signage assembly (10) is configured to selectively operate in an autonomous mode and in a connected mode.
A33. The multifunction signage assembly (10) of paragraph A32, wherein in the autonomous mode, the multifunction signage assembly (10) locally records both video via the camera module (26) and sensor data from the at least one environmental sensor (20) whenever the multifunction signage assembly (10) is powered.
A34. The multifunction signage assembly (10) of any of paragraphs A32-A33, wherein in the connected mode, the multifunction signage assembly (10) is connected to an/the video surveillance system (VSS), wherein the camera module (26) is controlled by the VSS via Open Network Video Interface Forum (ONVIF) protocol, wherein the at least one environmental sensor (20) can be read from network connections, and wherein the multifunction signage assembly (10) functions as another camera on the VSS.
A35. The multifunction signage assembly (10) of paragraph A34, wherein the VSS reads the at least one environmental sensor (20) and records and stores data as defined by the networked VSS.
B1. An aircraft (44) comprising the multifunction signage assembly (10) of any of paragraphs A1-A35.
B2. The aircraft (44) of paragraph B1, comprising a plurality of the multifunction signage assemblies (10) in a plurality of locations of the aircraft (44).
B3. The aircraft (44) of any of paragraphs B1-B2, comprising at least one multifunction signage assembly (10) along a cabin ceiling (50) of the aircraft (44).
B4. The aircraft (44) of any of paragraphs B1-B3, comprising at least one multifunction signage assembly (10) along a stow bin line (56) of the aircraft (44).
B5. The aircraft (44) of any of paragraphs B1-B4, comprising at least one multifunction signage assembly (10) by an exit door (58) of the aircraft (44).
B6. The aircraft (44) of any of paragraphs B1-B5, comprising a convolutional neural network (CNN) and/or a cabin services system (CSS) (62) configured to control the multifunction signage assembly (10).
B7. The aircraft (44) of any of paragraphs B1-B6, comprising at least one multifunction signage assembly (10) in each of a plurality of different airplane zones of the aircraft (44).
C1. A method (100), comprising:
   removing (102) an exit sign from an aircraft (44); and
   replacing (104) the exit sign with the multifunction signage assembly (10) of any of paragraphs A1-A35.
C2. The method (100) of paragraph C1, wherein the multifunction signage assembly (10) has the same form and fit of the exit sign.
C3. The method (100) of any of paragraphs C1-C2, further comprising connecting (106) the multifunction signage assembly (10) to an existing video surveillance system (VSS) of the aircraft (44), via a wired connection and/or a wireless network connection.
C4. The method (100) of any of paragraphs C1-C3, further comprising recording (108) video from within an interior environment of the aircraft (44), via the camera module (26) of the multifunction signage assembly (10).
C5. The method (100) of any of paragraphs C1-C4, further comprising monitoring (110) and/or recording (110) sensor data from the at least one environmental sensor (20) of the multifunction signage assembly (10).
C6. The method (100) of any of paragraphs C1-C5, further comprising performing (112) analytics within an interior environment of the aircraft (44).
C7. The method (100) of paragraph C6, wherein performing (112) analytics comprises theft detection, tracking seat activity, tracking passenger motion within the interior environment, detecting identity theft, detecting abnormal activity within the interior environment of the aircraft (44), identifying a loose panel within the interior environment of the aircraft (44), identifying a seat with issues, monitoring cabin activity during passenger boarding, monitoring meal service times and duration, monitoring cabin crew cabin checks, monitoring time to answer passenger call requests, and/or monitoring passenger debarkation.
C8. The method (100) of paragraph C6 or C7, further comprising receiving (114) a request for analytics performance from a crew member of the aircraft (44).
D1. A method (200), comprising:
   comprising performing (202) analytics within an interior environment of an aircraft (44) using the multifunction signage assembly (10) of any of paragraphs A1-A35.
D1.1 The method (200) of paragraph D1, further comprising analyzing (204) video from the camera module (26) of the multifunction signage assembly (10), wherein performing (202) analytics is performed using the video from the camera module (26).
D1.2. The method (200) of paragraph D1 or D1.1, further comprising monitoring (206) and analyzing (206) sensor data from the at least one environmental sensor (20) of the multifunction signage assembly (10), wherein performing (202) analytics is performed using the sensor data from the at least one environmental sensor (20).
D2. The method (200) of any of paragraphs D1-D1.2, wherein performing (202) analytics comprises theft detection, tracking seat activity, tracking passenger motion within the interior environment, detecting identity theft, detecting abnormal activity within the interior environment of the aircraft (44), identifying a loose panel within the interior environment of the aircraft (44), identifying a seat with issues, monitoring cabin activity during passenger boarding, monitoring meal service times and duration, monitoring cabin crew cabin checks, monitoring time to answer passenger call requests, monitoring passenger debarkation, and/or detecting a sick passenger.
D3. The method (200) of any of paragraphs D1-D2, wherein the camera module (26) of the multifunction signage assembly (10) is Al-driven.
D4. The method (200) of any of paragraphs D1-D3, wherein the performing (202) analytics is Al-driven.
D5. The method (200) of any of paragraphs D1-D4, wherein performing (202) analytics comprises determining (210) a typical duration for passenger boarding, meal services, cabin crew cabin checks, time to answer passenger call requests, and/or passenger debarkation.
D6. The method (200) of any of paragraphs D1-D5, further comprising recommending (220) different times for meal services and/or cabin crew cabin checks.
D7. The method (200) of any of paragraphs D1-D6, further comprising determining (220) delivery methods for meal services for efficient use of cabin crew time.
D8. The method (200) of any of paragraphs D1-D7, further comprising adjusting (214) an airflow based on information determined during performing (202) analytics.
D9. The method (200) of any of paragraphs D1-D8, further comprising adjusting (216) a local temperature based on information determined during performing (202) analytics.
D10. The method (200) of any of paragraphs D1-D9, further comprising determining (222) and/or predicting (222) when aircraft maintenance is needed, based on information determined during performing (202) analytics.
D11. The method (200) of any of paragraphs D1-D10, further comprising tailoring (218) environmental controls for maximum efficiency and passenger comfort, based on information determined during performing (202) analytics.
D12. The method (200) of any of paragraphs D1-D11, further comprising monitoring (206) and storing (206) data from the at least one environmental sensor (20).
D13. The method (200) of any of paragraphs D1-D12, further comprising looking for changes in environment to predict future maintenance issues.
D14. The method (200) of any of paragraphs D1-D13, further comprising combining (208) analytics with aircraft maintenance records to correlate sensor events with failures recorded in past maintenance logs.
D15. The method (200) of any of paragraphs D1-D14, further comprising comparing (212) each passenger to other passengers to find activity or actions that are out of place with other passengers in a monitored area of the aircraft (44).
D16. The method (200) of any of paragraphs D1-D15, further comprising comparing (212) passenger behavior with behavior stored in an AI model.
D17. The method (200) of any of paragraphs D1-D16, further comprising identifying a disruptive passenger, identifying a crew response, identifying a medical response, and/or identifying a dangerous passenger, based on information determined during performing (202) analytics.
D18. The method (200) of any of paragraphs D1-D17, further comprising sending (224) an alert to a/the VSS of the aircraft (44), based on information determined during performing (202) analytics.
D19. The method (200) of any of paragraphs D1-D18, further comprising monitoring (226) for an increase in stow bin open/close activity when cabin lighting within the aircraft (44) is at a minimum.
D20. The method (200) of any of paragraphs D1-D19, further comprising determining whether a respective passenger returns to a same seat after an increase in stow bin activity is detected.
D21. The method (200) of any of paragraphs D1-D20, further comprising sending (224) an alert to cabin crew, based on information determined during performing (202) analytics.
D22. The method (200) of any of paragraphs D1-D21, further comprising enabling night mode on the multifunction signage assembly (10).
D23. The method (200) of any of paragraphs D1-D22, wherein performing (202) analytics is performed without retaining any personally identifiable information of passengers on board the aircraft (44).
D24. The method (200) of any of paragraphs D1-D23, further comprising the method (100) of any of paragraphs C1-C8.
E1. The use of the multifunction signage assembly (10) of any of paragraphs A1-A35 to record video within an interior environment of an aircraft (44).
E2. The use of the multifunction signage assembly (10) of any of paragraphs A1-A35 to record sensor data within an interior environment of an aircraft (44).

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein.

## Claims

1. A method (200), comprising:
analyzing (204) video from a camera module (26) of a multifunction signage assembly (10), wherein the multifunction signage assembly (10) comprises:
a housing (12) defining an internal cavity (14);
a programmable display (18) visible on at least one external surface (16) of the housing (12), wherein the programmable display (18) displays an informational or emergency message for passengers within a vehicle (11);
at least one environmental sensor (20) positioned within the internal cavity (14) of the housing (12), wherein the at least one environmental sensor (20) is configured to measure or detect one or more events or changes within an interior environment within the vehicle (11);
the camera module (26) configured to record and store video recordings within the interior environment within the vehicle (11), wherein the camera module (26) is positioned within the internal cavity (14) of the housing (12); and
a processing unit (24) positioned within the internal cavity (14) of the housing (12), wherein the processing unit (24) is operatively coupled to the camera module (26), the at least one environmental sensor (20), and the programmable display (18);
monitoring (206) and analyzing (206) sensor data from the at least one environmental sensor (20) of the multifunction signage assembly (10); and
performing (202) analytics within the interior environment of the vehicle (11) using the video from the camera module (26) and/or the sensor data from the at least one environmental sensor (20), wherein performing (20) analytics comprises theft detection, tracking seat activity, tracking passenger motion within the interior environment, detecting identity theft, detecting abnormal activity within the interior environment of the aircraft, identifying a loose panel within the interior environment of the aircraft, identifying a seat with issues, monitoring cabin activity during passenger boarding, monitoring meal service times and duration, monitoring cabin crew cabin checks, monitoring time to answer passenger call requests, monitoring passenger debarkation, and/or detecting a sick passenger.

2. The method (200) according to claim 1, further comprising recommending (220) different times for meal services and/or cabin crew cabin checks.

3. The method (200) according to claim 1 or 2, further comprising adjusting (214) an airflow within the vehicle (11) based on information determined during performing (202) analytics.

4. The method (200) according to any preceding claim, further comprising determining (222) and/or predicting (222) when vehicle maintenance is needed, based on information determined during performing (202) analytics.

5. The method (200) according to any preceding claim, further comprising sending (224) an alert to a video surveillance system, VSS, of the vehicle and/or comprising sending (24) an alert to cabin crew of the vehicle (11), based on information determined during performing (202) analytics.

6. A multifunction signage assembly (10) for a vehicle (11), the multifunction signage assembly (10) comprising:
a housing (12) defining an internal cavity (14);
a programmable display (18) visible on at least one external surface (16) of the housing (12), wherein the programmable display (18) displays an informational or emergency message for passengers within a vehicle (11);
at least one environmental sensor (20) positioned within the internal cavity (14) of the housing (12), wherein the at least one environmental sensor (20) is configured to measure or detect one or more events or changes within an interior environment within the vehicle (11);
a camera module (26) configured to record and store video recordings within the interior environment within the vehicle (11), wherein the camera module (26) is positioned within the internal cavity (14) of the housing (12); and
a processing unit (24) positioned within the internal cavity (14) of the housing (12), wherein the processing unit (24) is operatively coupled to the camera module (26), the at least one environmental sensor (20), and the programmable display (18).

7. The multifunction signage assembly (10) according to claim 6, wherein the programmable display (18) is selectively dimmable.

8. The multifunction signage assembly (10) according to claim 6 or 7, wherein the processing unit (18) is configured to change a language, a font, a text, a graphic, and/or a gif shown on the programmable display (18), and wherein the processing unit (24) is configured to display a custom text, graphic, animation, and/or gif on the programmable display (18).

9. The multifunction signage assembly (10) according to any of claims 6-8, wherein the multifunction signage assembly (10) is configured to be used on a plurality of different vehicle models, and wherein the multifunction signage assembly (10) is configured to replace an existing signage assembly of the vehicle (11) without requiring different fairings or new holes to be drilled in the vehicle (11) to receive the multifunction signage assembly (10).

10. The multifunction signage assembly (10) according to any of claims 6-9, wherein the multifunction signage assembly (10) is configured to perform analytics.

11. The multifunction signage assembly (10) according to any of claims 6-10, wherein the multifunction signage assembly (10) is an exit sign, an airplane door exit sign, an over-aisle exit sign, and/or a lavatory sign for an aircraft (44).

12. The multifunction signage assembly (10) according to any of claims 6-11, wherein the multifunction signage assembly (10) is operatively coupled to an existing video surveillance system, VSS, of the vehicle (11), via a wired network connection and/or a wireless network connection.

13. The multifunction signage assembly (10) according to any of claims 6-12, wherein the camera module (26) is controlled via Open Network Video Interface Forum, ONVIF, protocol.

14. The multifunction signage assembly (10) according to any of claim 6-13, further comprising an infrared, IR, illuminator.

15. The multifunction signage assembly (10) according to any of claims 6-14, wherein the at least one environmental sensor (20) comprises a microphone, an accelerometer, a humidity sensor, a temperature sensor, a carbon dioxide sensor, a methane sensor, a light sensor, a ultraviolet, UV, light sensor, a barometric sensor, an air movement sensor, an ultrasonic sensor, a LIDAR sensor, an audio sensor, a vibration sensor, a magnetic Hall effect sensor, an air pressure sensor, an airflow sensor, a multi-sensor module, an oxygen sensor, an ammonia sensor, an olfactory sensor, a shock/crash sensor, a force/load/torque/strain sensor, a position sensor, a motion/velocity sensor, a radio frequency, RF, sensor, a smoke sensor, a radio frequency identification (RFID) sensor, a gas sensor, a sulfur dioxide sensor, and/or a hydrocarbon sensor.
